# EUROPEAN PATENT APPLICATION

(11) **EP 1 717 698 A2**
(43) Date of publication of application: **02.11.2006**
(21) Application number: 06112216.4
(22) Date of filing: 04.04.2006
(51) Int. Cl.: G06F 9/445

(54) **Software installation system and method thereof and storage medium for software installation program**

(30) Priority: 26.07.2005 KR 2005068104; 18.04.2005 KR 2005031912
(71) Applicant: Samsung Electronics Co., Ltd, Suwon-si, Gyeonggi-do 442-742 (KR)
(72) Inventor: CHO, Yong-jun, Gyeonggi-do (KR); CHOI, In-sung, Seoul (KR)
(74) Representative: Read, Matthew Charles

(57) **Abstract**

A software installation system and method, and a storage medium storing a software installation program. The software installation system includes a software installation program provided to a user terminal. The software installation program provides interfaces to guide the user through the installation process. These interfaces include a main user interface to display the current installation step, along with the current installation choices. Another interface is an auxiliary user interface that displays previous settings selected through the installation process and which allows the user to change those settings throughout the installation process. The user terminal or computer has a storage unit to store the setting selected by the user through the main UI and the auxiliary UI. Thus it is possible for a user to easily display a setting the user has selected previously in the installation process and also to easily change that setting.

## Description

The present general inventive concept relates to a software installation system and method, and a storage medium for a software installation program. More particularly, the present general inventive concept relates to a software installation system and method which enables a user to easily confirm a setting that the user set during software installation and also to easily and simply change a previously-set setting, and a storage medium to store a software installation program.

Although a computer is typically equipped with basic software such as an operating system, utility programs, and language processing programs, the computer will often require additional software in order to satisfy the user's demand. For example, a user often installs applications and drivers. Examples of these applications include office programs such as Excel, Access, and Power point, as well as other word processor and statistical programs. Drivers enable the computer to communicate with peripherals such as printers, scanners and multifunction devices so that it can control these peripherals through the computer.

In order to install these applications or drivers, the user is usually provided with a diskette or CD that contains the actual software, including the application or driver together with a software installation program. Alternatively, the Internet allows the user to download the application or driver. In this case, the downloading is usually permitted only to an authorized user or a person who has paid for the download in advance.

The software, whether an application or driver, is installed to the computer by the following procedure. First, the user inserts a diskette or a CD storing an application or driver into a floppy disk drive or a CD-ROM drive of a computer and activates it. Alternatively, the user accesses a website providing the software and receives a user authentication. The software installation program is activated to begin the installation process. Then, a user interface (UI) is activated on the user terminal to guide the installation of the application or driver.

During the installation process, the user is presented with several choices affecting the installation. For example, the user may be asked in which drive and which folder the program files should be stored. The user may have to enter several such settings throughout the installation. The user selects these settings through the UI to install the software. As different stages of the installation occur, the UI changes its display in sequence according to the user's selection. The settings selected by the user through their respective UIs may include a supported language, an IP address, a location for installation, and an installation range of the setting. If the software to be installed is a driver, the UI provides the option of selecting a port to be connected with the peripheral and whether to perform a test after installation.

Since these respective UIs are activated in sequence, according to user's selections, the setting that the user has selected is temporarily stored in a registry key, but is not visible to the user until a program file is copied to and installed in the user terminal. However, if the user forgets his/her selected setting and thus would like to recall it, or if the user would like to change an earlier selected setting, the user has to go back through previous UI's by selecting the "Back" button provided on a lower position of a current UI until he/she finds the desired UI setting selector. It is often the case that the installing procedure is then repeated from the first step.

Therefore, there has been a demand for a method by which a user can easily confirm or recall the setting that he/she selected during installation of an application or driver and to easily and simply change the pre-set setting through the current UI without having to return to a previous UI.

According to the invention there is provided a software installation program to be run on a user terminal, the software installation program comprising; installation unit means to install software to the user terminal according to a setting selected by a user, the software being adapted for driving a device connected to the user terminal or for performing a specified function; a main control module for controlling a main user interface for displaying a setting of the software on the user terminal; an auxiliary control module for controlling an auxiliary user interface for displaying the selected setting, the software installation program being adapted to store the setting selected by the user through the main user interface and auxiliary user interface in a storage unit of the user terminal.

According to the invention there is also provided a software installation system comprising a software installation program comprising installation unit means to install to a user terminal software to drive a device connected to the user terminal according to a setting selected by a user, or software for performing a specified function; a main user interface control module to control a main user interface to display a setting of the software on the user terminal; and an auxiliary user interface control module to control an auxiliary user interface to display the selected setting, the user terminal having a storage unit to store the setting selected by the user through the main user interface and the auxiliary user interface.

Preferably, information about the connected device is displayed on at least one of the main user interface and the auxiliary user interface.

Preferably, the auxiliary user interface control module generates a basic information section to display particular information about the software and an installation information section to display information about the setting selected through the main user interface.

Preferably, the storage unit comprises a main user interface memory to store information about the main user interface, a registry key to store files essential for the installation and an auxiliary user interface memory to store information about the auxiliary user interface.

Preferably, the storage installation system further comprises a setting change module to change the setting displayed on the auxiliary user interface according to a user selection.

Preferably, the software and the software installation program are downloaded to the user terminal through at least one of a storage medium, an internet website or dedicated server, a device, and an internal network.

According to invention, there is also provided a method of installing software for driving a device connected to a user terminal or software for performing a specified function, the method comprising displaying a main user interface to select a setting necessary for the software installation and displaying an auxiliary user interface to display the setting selected through the main user interface.

Preferably, the method further comprises changing the setting displayed through the auxiliary user interface.

Preferably, the method further comprises downloading the software and the software installation program from at least one of a storage medium, an internet website or dedicated server, a device, and an internal network to the user terminal.

Preferably, the device is at least one of a device connected to the user terminal through a wired or wireless interface, and a device connected with a slot of a main board of the user terminal.

According to the invention, there is also provided a method of installing a software application on a computer, the method comprising providing a main user interface to display a plurality of operation settings which are sequentially displayed; and providing an auxiliary user interface displaying a plurality of previous operation settings together with a current operation setting to change a previously selected operation.

According to the invention, there is also provided a storage medium storing a program providing a method of installing a software application on a computer, the method comprising providing a main user interface to display a plurality of operation settings which are sequentially displayed; and providing an auxiliary user interface displaying a plurality of previous operation settings together with a current operation setting to change a previously selected operation.

The present invention has been developed in order to solve the above problems in the related art. Accordingly, an aspect of the present general inventive concept is to provide a software installation system and method which enables a user to easily confirm a setting that the user has selected during installation of an application or driver and also to easily change the pre-set setting, and a storage medium storing a software installation program.

Additional aspects and advantages of the present general inventive concept will be set forth in part in the description which follows and, in part, will be obvious from the description, or may be learned by practice of the general inventive concept.

The foregoing and/or other aspects and utilities of the present general inventive concept can be achieved by providing a software installation system including a software installation program to a user terminal. The software installation program includes an installation unit to install software for driving a device connected to the user terminal according to a setting selected by a user, or software for performing a specified function, to the user terminal. The software installation program also has a main UI control module to control a main UI to display a setting of the software on the user terminal, and an auxiliary UI control module to control an auxiliary UI to display the selected setting. The user terminal has a storage unit to store the setting selected by the user through the main UI and the auxiliary UI.

Information about the connected device can be displayed on at least one of the main UI and the auxiliary UI.

The auxiliary UI control module generates a basic information section to display particular information about the software, and an installation information section to display information about the setting selected through the main UI.

A storage unit can store information concerning the installation. Examples include having a storage unit that has an area for main UI memory to store information about the main UI, an auxiliary UI memory that can store information about the auxiliary UI, along with a registry key to store files essential for the installation.

The software installation system further includes a setting change module to change the setting displayed on the auxiliary UI according to a user selection.

If a predetermined setting displayed on the installation information section of the auxiliary UI is selected, the main UI can be activated to allow the user to change the setting.

If a predetermined setting displayed on the installation information section of the auxiliary UI is selected, at least one of a selection box and a pop-up window which are to set the setting can be displayed.

If a predetermined setting displayed on the installation information section of the auxiliary UI is selected, a hyperlink can be presented that links to the corresponding UI.

Information about a setting changed through the main UI, the selection box, and the pop-up window can be displayed on the installation information section of the auxiliary UI.

The device can be at least one of a device connected to the user terminal through a wired or a wireless interface, such as a printer, a photocopier, a facsimile machine, a scanner, a multifunction peripheral, a digital camera, an MP3 player, a mobile phone, or a device connected with a slot of a main board of the user terminal, such as a sound card, a graphics card, or a LAN card.

The software and the software installation program can be downloaded to the user terminal through at least one of a storage medium, an Internet website, a dedicated server, a device, or an internal network.

The software and the software installation program can be stored on a storage medium. The storage medium includes at least one of a CD, a DVD, a diskette, or a memory stick for storing the software and the software installation program.

The Internet website or the dedicated server can be accessible through a wired or wireless network.

The device stores the software and the software installation program, and the software and the software installation program are downloaded from the device to the user terminal.

The device is supported by a communication protocol to access the internet through a network, and to then download the software and the software installation program from a website or a dedicated server through the internet.

The software and the software installation program to be downloaded to the user terminal from the website or the dedicated server through the Internet can be downloaded to the device, and the device provides the software and the software installation program to another user terminal.

In the internal network system including a main terminal serving as a server and storing the software and the software installation program, and a user terminal serving as a client, the software and the software installation program can be provided to the user terminal from the main terminal.

The foregoing aspects and utilities of the present general inventive concept may also be achieved by providing a method of installing software to a user terminal. This software may be a driver for a device or for software that performs a specific function. The method includes displaying a main UI to select a setting necessary for the software installation, and displaying an auxiliary UI to display the setting selected through the main UI.

The foregoing aspects and utilities of the present general inventive concept may also be achieved by providing a storage medium that stores a software installation program which includes an installation unit to install software to drive a device connected to a user terminal according to a setting selected by a user or software to perform a specific function to a user terminal. The device also has a main UI control module to control the main UI to display a setting of the software on the user terminal, and an auxiliary UI control module to control an auxiliary UI to display the selected setting, the user terminal having a storage unit to store the setting selected by the user through the main UI and the auxiliary UI.

This and/or other aspects of the present invention will become apparent and more readily appreciated from the following description of the embodiments, taken in conjunction with the accompanying drawings of which:
Figure 1 is a view illustrating various methods of downloading software and a software installation program to a user terminal;
Figure 2 is a block diagram illustrating the relationship between the user terminal and the various downloading methods of Figure 1;
Figure 3 is a block diagram illustrating a software installation system according to an embodiment of the present general inventive concept;
Figures 4A to 4H are views illustrating user interfaces (UIs) displayed on a user terminal when a driver installation program installs a driver according to an embodiment of the present general inventive concept;
Figure 5 is a flowchart illustrating an exemplary embodiment of a process of installing a printer driver using a driver installation program; and

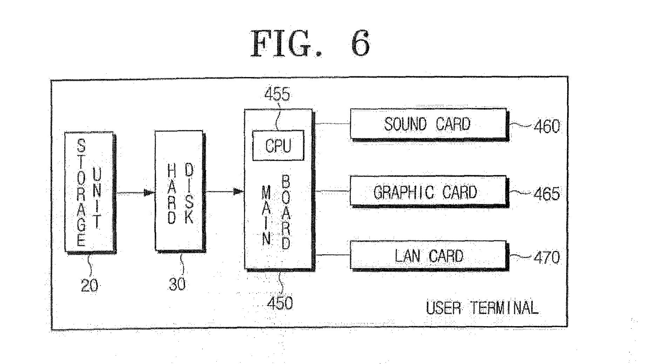

Figure 6 is a block diagram illustrating an installation program for a driver to directly connect a graphics card, a LAN card, and a sound card to a main board.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

A software installation program for installing a software application or a device driver to a user terminal or a device, is downloaded to the user terminal together with the application or the device driver.

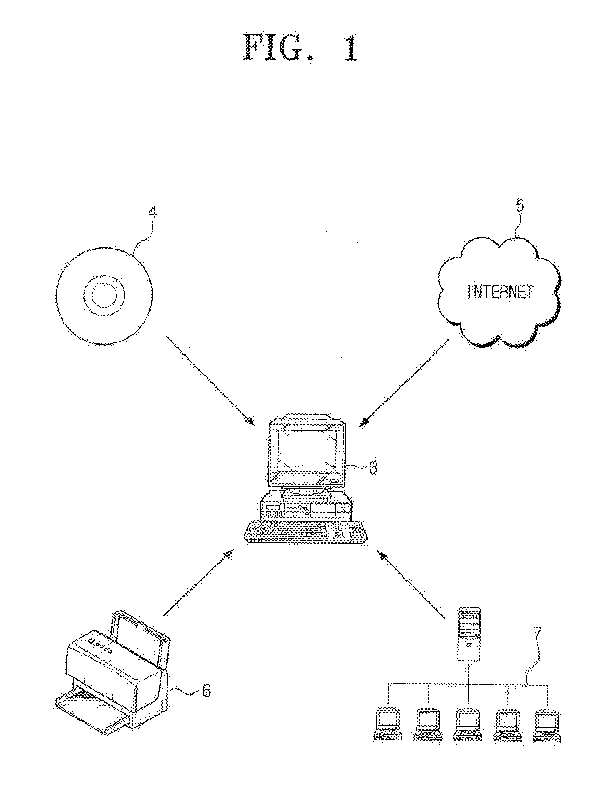

Figure 1 is a view illustrating various examples of downloading the software and the software installation program to a user terminal.

As illustrated in Figure 1, the software and the software installation program are downloaded to the user terminal 3 through a storage medium 4, an internet website or a dedicated server 5, a device 6, or an internal network 7.

An example of downloading the software and the software installation program to a user terminal is where the storage medium 4 such as a diskette, memory stick, or a CD containing the software and a software installation program is provided directly to a user. This example is likely to be the most broadly used. When the user accesses the diskette, CD, DVD, or memory stick storing either the application or the driver through the user terminal, the software installation program installs the software on the user terminal.

According to another example of downloading the software and the software installation program to a user terminal, a user accesses a website or a dedicated server 5 which is managed by a manufacturer or a seller of the application or the device 6. The user accesses the website or dedicated server 5 through a wired or wireless network, or by accessing an online site offering the software, and then downloads the desired application or driver. A user authentication procedure or a payment procedure is usually required, depending on the website.

Another example of downloading the software and the software installation program to a user terminal is mainly used to provide a device driver and refers to a method of downloading a driver or a driver installation program embedded in the device 6 to the user terminal. The way of using the device 6 is divided into two ways according to whether the Internet is accessible by the device 6 through a network. The two ways are as follows.

One example of using the device 6 is in the case that the Internet is accessible by the device 6 through a wired or wireless network. In this case, the device 6 comprises a communication module supported by FTP, HTTP protocol, or Bluetooth. The device 6 directly accesses the Internet and downloads a driver and a driver installation program. When the user terminal is communicably connected with the device 6, it downloads the driver and the driver installation program from the device 6.

The other example of using the device 6 is in the case that the Internet is not accessible by the device 6. According to this, an ID of the device 6 perceivable by the user terminal is changed such that a driver and a driver installation program are installed to the device 6. Generally, the device 6 is assigned an ID to be identified by the user terminal, and the user terminal then identifies the device 6 by its ID. If the ID of the device 6 is changed to the ID of a CD-ROM, the user identifies the device 6 as a CD-ROM. In this state, if the user terminal accesses the Internet through a network and downloads a driver and a driver installation program, the driver and the driver installation program are downloaded to both the user terminal and the device 6. The driver and the driver installation program are downloaded to the device 6 is stored to a memory device. If the user terminal accesses the device 6 through the network after the driver and the driver installation program have been stored to the device 6, the device 6 provides the driver and the driver installation program to another user.

Another example of downloading the software and the software installation program to a user terminal is downloading the software and the software installation program through the internal network 7 or an intranet, that may be organized by a school, corporation or public body, and provides an accessibility only to an authorized user. The intranet is comprised of a main terminal serving as a server and a plurality of user terminals serving as a client. These user terminals are linked with one another through a network. The main terminal stores various software and software installation programs required by the respective user terminals. The main terminal is also able to access the Internet through an external network and download software, including applications to be installed to a user terminal, as well as the software installation program, from a website. Accordingly, the user terminals access the main terminal and download the software and the software installation program from the main terminal.

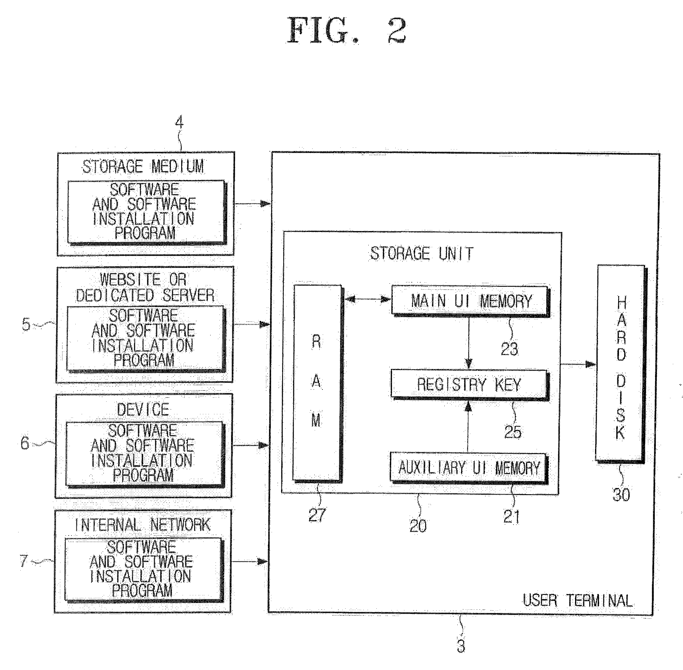

The software is installed to the user terminal according to the user selection after the software and the software installation program are downloaded to the user terminal through the storage medium 4, the internet website, the device 6 or the internal network 7 and stored in the user terminal. That is, the software and the software installation program are temporarily stored in a RAM 27, as illustrated in Figure 2, and the application or the driver is installed to a hard disk 30 upon receipt of an installation command.

The software installation program may be a single execution file (e.g. setup.exe) or a package of files which are required for the installation of several software packages.

The software installation program provides a main UI displayed on the user terminal to help a user interact with the software installation program, and an auxiliary UI displaying basic information about the software and information about the setting selected by the user. In order to provide the main UI and the auxiliary UI, the software installation program and the user terminal have the following elements.

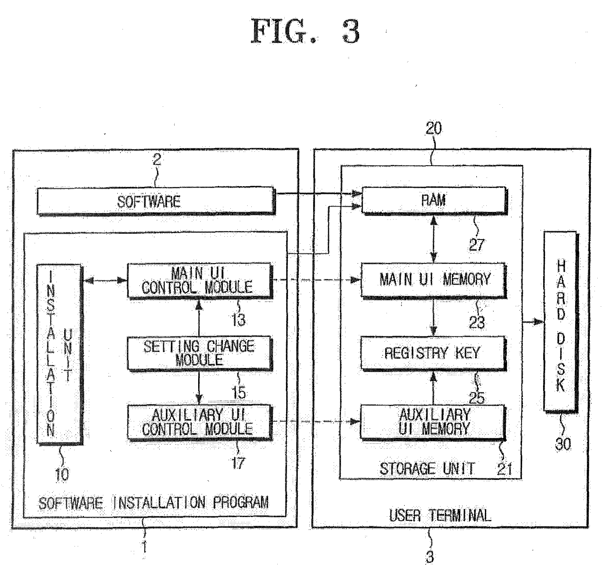

Figure 3 is a block diagram illustrating a software installation system according to an embodiment of the present general inventive concept. A software installation program 1 comprises an installation unit 10, a main UI control module 13, an auxiliary UI control module 17 and a setting change module 15.A user terminal 3, where a driver is installed, by way of an example comprises a storage unit 20.

The installation unit 10 of the software installation program 1 copies files and performs a setup such that software 2 is transferred from a storage medium to the user terminal 3 after the setting selection is completed. The installation unit 10 performs a different task according to whether the software 2 to be installed is an application or a driver. If the software 2 is a driver, the main UI is not already defined and the installation unit 10 copies a minimum number of files that are essential for the configuration of the main UI or for the operation of an automatic plug-in function such as plug and play (PNP). If the software 2 is an application, the installation unit 10 activates the first one of the series of UIs which were created in advance.

The main UI control module 13 configures a main UI based on pre-stored main UI information or according to user selection, and activates the main UI. If a user is not able to change the setting through an auxiliary UI, the main UI control module 13 provides the main UI at the request from the setting change module 15 in order for the_user to change the setting.

The auxiliary UI control module 17 generates an auxiliary UI. The auxiliary UI includes a basic information section to display basic information and an installation information section to display installation information set according to user selection. The auxiliary UI control module 17 displays the basic information on the basic information section according to information stored in an auxiliary UI memory 21, and displays the installation information on the installation information section according to user selection that is input through the main UI. The basic information displayed on the basic information section includes a product supplier, a product model, a version, a distribution date, and a telephone number for service. If necessary, an email address of a producer and a product ID may be added in the basic information by the product supplier. The installation information displayed on the installation information section includes an installation type, an installation style, an OS, an IP address, a location for installation and, if necessary, further includes a port connected to a device.

It is impossible for a user to change the basic information because the basic information is specific information about the product. However, it is possible for a user to change the installation information when the user desires to change it. The setting change module 15 provides the installation information in the form of hyper-text or hyper-media in order for a user to change the installation information displayed on the installation information section, or provides a selection menu or a pop-up window. If the installation information is provided in the form of hyper-text or hyper-media, the user is hyper-linked with a corresponding main UI through which the user has set the installation information so that the user can directly change the installation information through the main UI. Accordingly, if the user selects the installation information the user wants to change by using an input device such as a mouse or keyboard, the setting change module 15 requests the main UI control module 13 to display a corresponding main UI on the user terminal 3, or to display a selection menu or pop-up window about the installation information to be changed.

The auxiliary UI may be continuously displayed on the user terminal 3 together with the main UI during the program installation regardless of the user selection. Alternatively, the user can have the option of whether to display the auxiliary UI. For example, "Browse selected setting" button is provided on the main UI to select the display of the auxiliary UI. If the user wishes to confirm the user's selected setting, the user clicks the "Browse selected setting" button such that the auxiliary UI is displayed.

The storage unit 20 of the user terminal 3 includes a main UI memory 23, a registry key 25, and the auxiliary UI memory 21. The main UI memory 23 stores the main UI that will be provided to the user or information about the main UI. The registry key 25 stores a list of copied files and information necessary for installation. The information stored in the registry key 25 includes a list of temporary files which are to be deleted after the installation, or a list of files which has been copied back in case of an uninstall, and information essential for installation such as folder names of copies files, the model name of a device, a version, a distribution date, a manufacturer, and contact information for service. The registry key 25 stores the information stored in the main memory 23 and the auxiliary memory 21 so that the information can be used in copying and setting-up the files of the software 2.

The auxiliary UI memory 21 stores information for the configuration of the auxiliary UI, and the basic information and the installation information displayed on the auxiliary UI. The basic information of the auxiliary UI can be changed only by a product supplier, and includes a product name, a product version, a distribution date, publisher contact information, an email account of the publisher, and a product ID. The installation information can be changed by a user during the installation, and includes an installation type, an installation style, an OS, a language, an IP address, a date, a user name, a manufacturer name, a time zone, a user e-mail address, and installations factors. For example, if the software 2 is a printer driver, the installation type refers to the selection of installation options for either a local printer, a network printer, or customer installation. Although in this embodiment the registry key 25 and the auxiliary UI memory 21 are separately provided, the registry key 25 may be designed to store information that is stored in the auxiliary UI memory 21. In this case, the auxiliary UI memory 21 is not required.

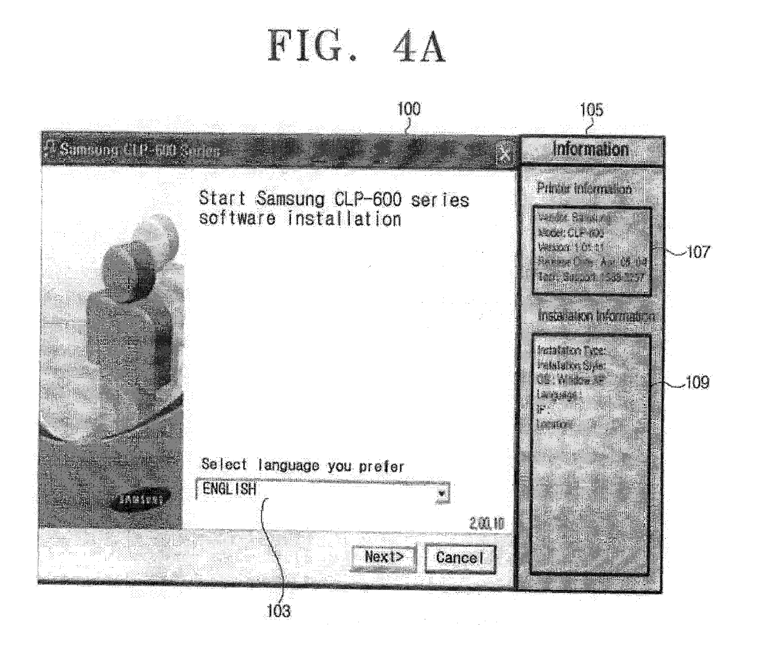

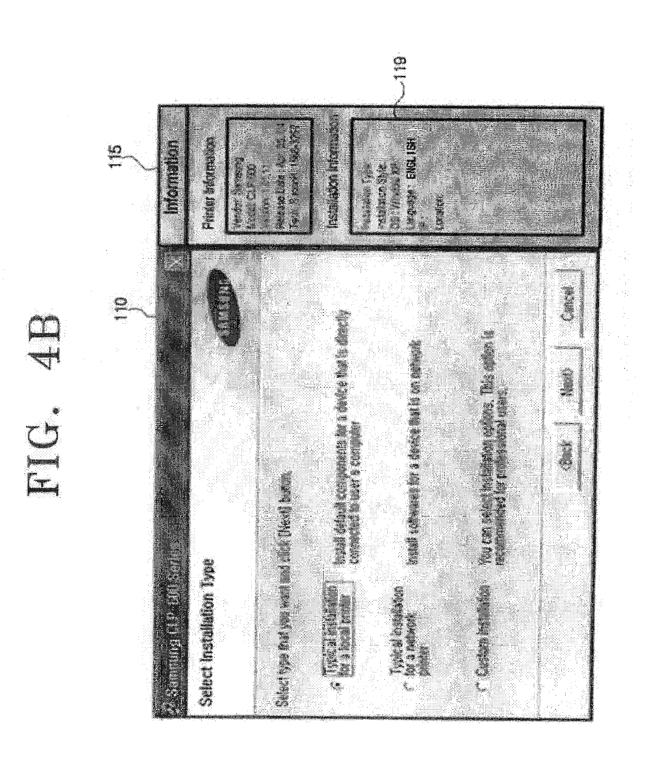

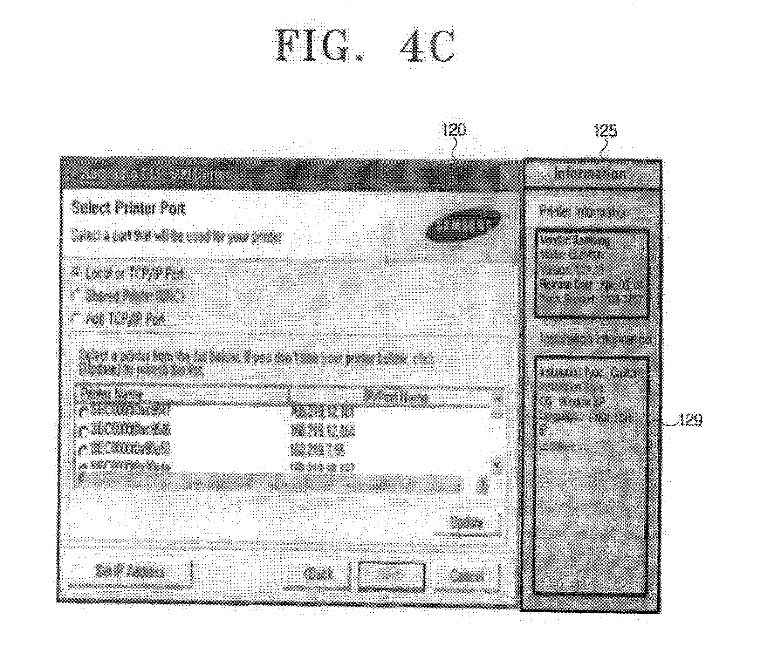

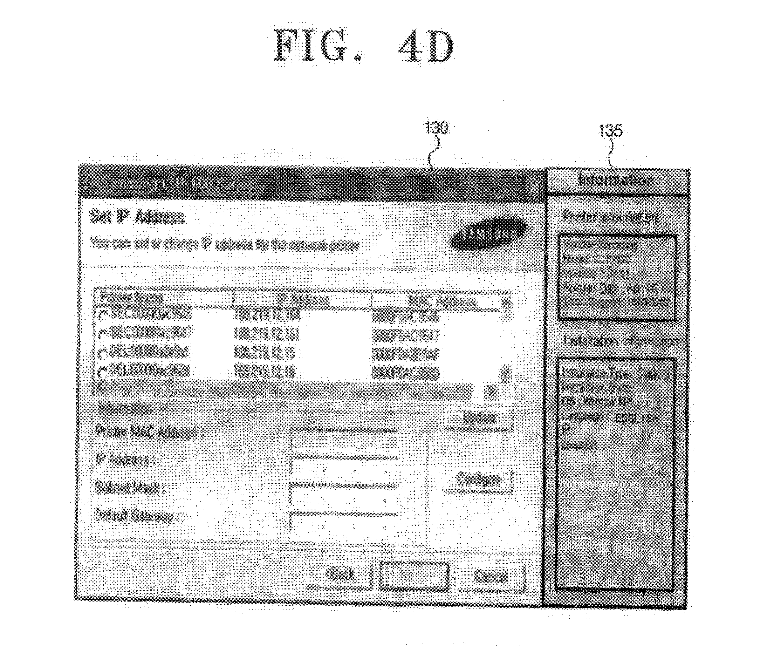

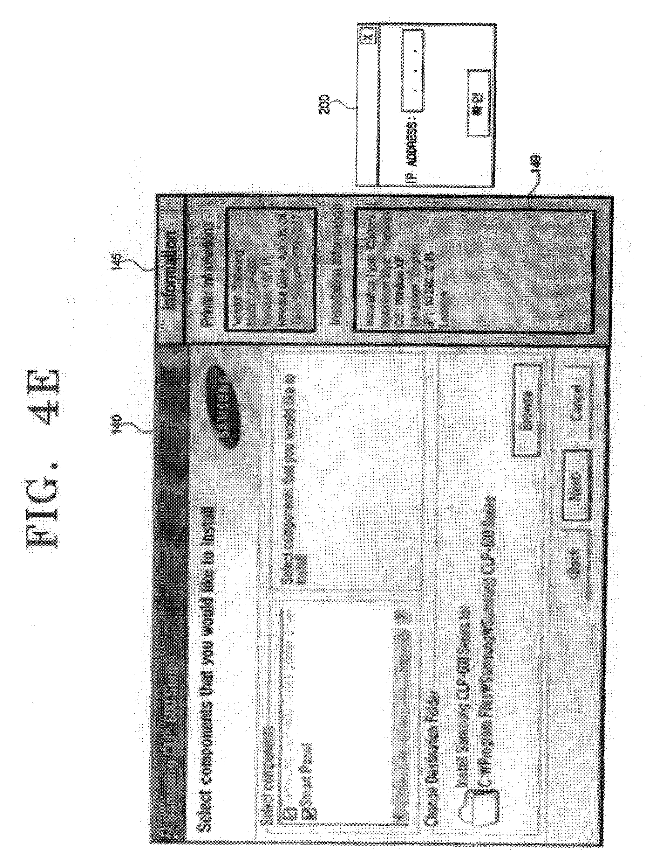

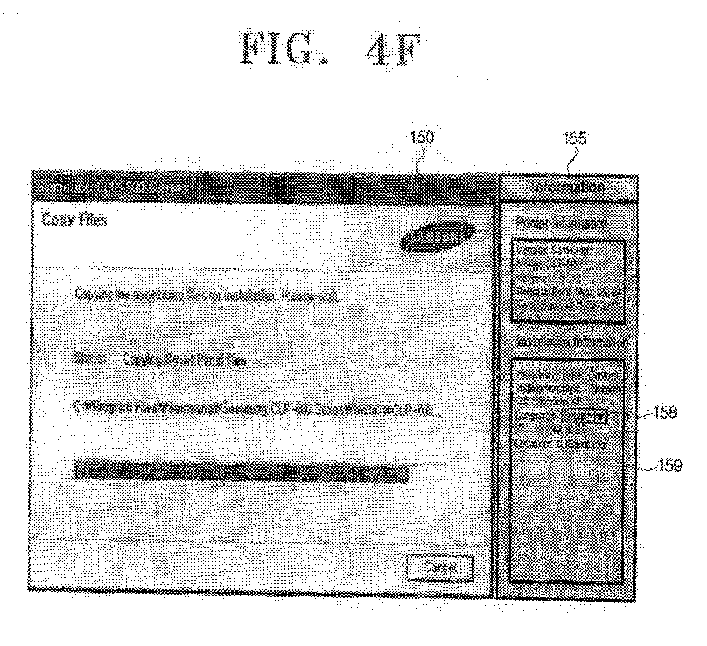

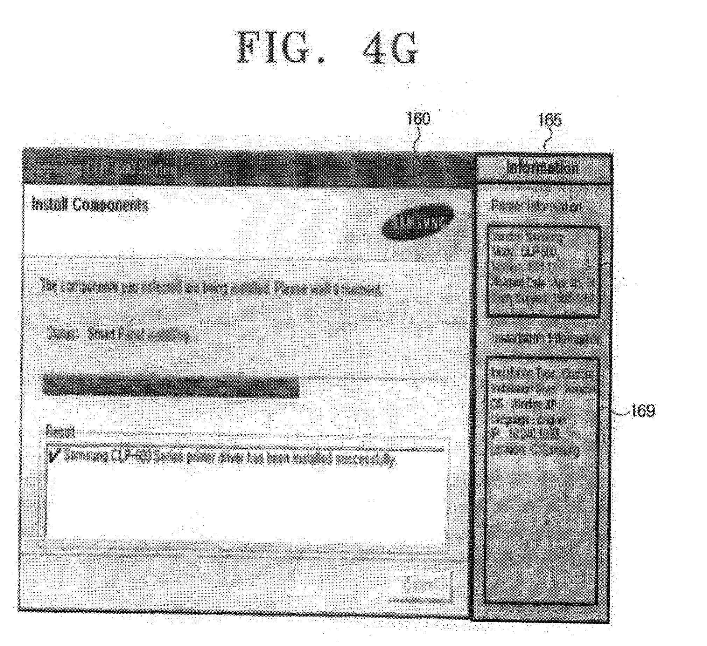

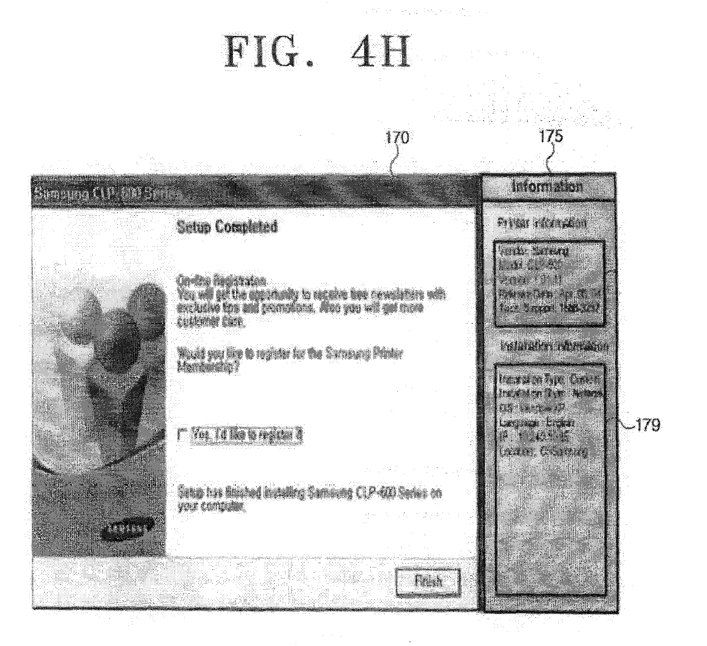

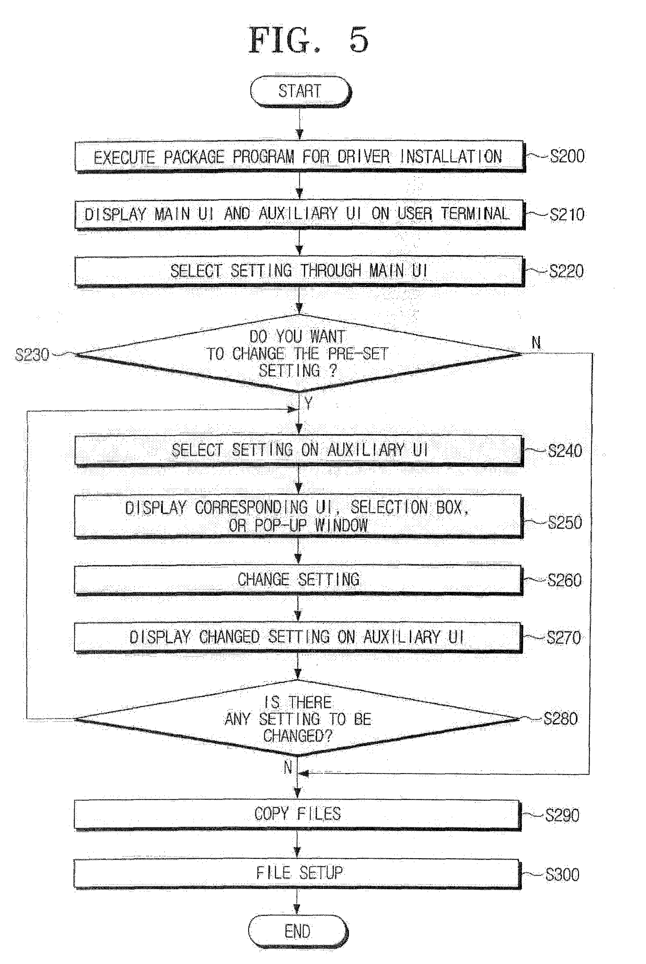

A process of installing a driver to the user terminal 3 using the driver installation program 1 will now be described with reference to Figures 4 and 5.

When the driver installation program is downloaded to the user terminal 3 in one of the four methods as described in Figure 1 at operation S200, the installation unit 10 provides a first main UI 100 having a first auxiliary UI 105 to the user terminal 3 at operation S210 as illustrated in Figure 4A. The first main UI 100 provides brief information for the installation and a drop-down menu 103 to select a language. The basic information section 107 of the first auxiliary UI 105 displayed together with the first main UI 100 displays the basic information about a product, and the installation information section 109 displays the installation information such as installation type, installation style, OS, language, IP address, and location for installation. The installation information, except for the OS, is provided in the form of a blank in order for a user to type. If the user selects a language through the drop-down menu 103 and clicks the "Next" button, the main UI control module 13 displays a second main UI 110, and the auxiliary UI control module 17 stores the information selected by the user to the auxiliary UI memory 21 and displays information about the language selected by the user on a second auxiliary UI 115.

As illustrated in Figure 4B, the second main UI 110 is to select the installation type. The auxiliary UI control module 17 displays information about the language selected through the first main UI 100 on an installation information section 119 of the second auxiliary UI 115 displayed along with the second main UI 110. If the installation type is selected through the second main UI 110 and the "Next" button is clicked, the main UI control module 13 activates a third main UI 120 to select a printer port as illustrated in Figure 4C. The auxiliary UI control module 17 stores the information about the installation type selected by the user in the auxiliary UI memory 21 and simultaneously displays the information about the installation type selected by the user on an installation information section 129 of a third auxiliary UI 125.

Next, if a fourth main UI 130 and a fourth auxiliary UI 135 are displayed on the user terminal 3 under the controls of the main UI control module 13 and the auxiliary UI control module 17 as illustrated in Figure 4D, the user types an IP address. Next, the main UI control module 13 provides a next main UI 140 (see Figure 4E) after the user input is completed, and the auxiliary UI control module 17 provides a next auxiliary UI and displays the IP address on an installation information section 149.

If the entire setting selections are completed at operation S 220, the installation unit 10 copies files to be installed to the user terminal 3 and the main UI control module 13 configures a main UI 150 to indicate that the files to be installed are being copied as illustrated in Figure 4F at operation S290. Next, the installation unit 10 installs the copied files to the user terminal 3 and, as shown in Figure 4G, the main UI control module 13 displays information indicating that the files are being installed on a main UI 160 at operation S300. When the installation is completed, the main UI control module 13 displays a message indicating that installation is completed on a main UI dialog box 170. Auxiliary UI dialog boxes 155, 165 and 175 are displayed as illustrated in Figures 4F to 4H after the setting selection is completed, and display all installation information in their respective installation information sections 159, 169 and 179.

If the user would like to change the setting the user selected at operation S230, the user directly selects the installation information displayed on the installation information section of the auxiliary UI 155, 165 and 175 to access and change the setting at operation S240.

If the installation information displayed in the installation information sections as illustrated in Figures 4E to 4F is selected, the setting change module 15 moves to another main UI to makes it possible to set the installation information the user wants to change, or provides a selection box 158 or a pop-up window 200 at operation S250, such that the user can change the setting at operation S260.

More specifically, if the user would like to change the installation type through the auxiliary UI 145 of Figure 4E, the user selects 'Custom' which is set as a current installation type. Then, the setting change module 15 requests the main UI control module 13 to remove the currently displayed main UI 140 and to display the previous main UI 110 such that the installation type is newly selected. The main UI control module 13 displays the main UI 110 of Figure 4B on the user terminal 3 such that the user can re-select the installation type through the main UI 110. After the re-selection of the installation type, it is possible to go back to the main UI 140 of Figure 4E, and if there is a setting to be changed subsequent to the change of the installation type, the following main UI's are displayed in the original sequence.

As illustrated in Figure 4F, the language information can be provided in the form of a selection box 158. If the user selects the selection box 158 to change a language, the setting change module 15 displays all kinds of languages on the selection box 158. If the user selects a predetermined language, the setting change module 15 stores the selected language in the auxiliary UI memory 21 and displays the changed language on the installation information section 158.

The installation information can be changed through the pop-up window 200 in the following steps. If a user clicks the displayed IP address to change the IP address, the setting change module 15 activates the pop-up window 200 in order for the user to type a new IP address as illustrated in Figure 4E. If the user types a new IP address into the pop-up window 200 and clicks the "Ok" button, the setting change module 15 not only stores the IP address typed by the user in the auxiliary UI memory 21 but also displays the IP address on the installation information section 159.

As described above, it is possible to change the installation type through the main UI and change the language through the selection box 158. It is also possible to change the IP address through the selection box 158 or the main UI, and it is possible to change the language through the pop-up window 200. However, if one change results in another change, it is preferable to change the setting by going back to a corresponding main UI.

Information about the setting changed by the user is displayed on the installation information section of the auxiliary UI at operation S270. If there is no setting to be changed at operation S280, files to be installed are copied at operation S290 and the files are set up at operation S300.

As described above, since the software installation program displays the setting the user has selected through the auxiliary UI, the user is able to easily confirm the setting that the user has selected at any moment during the installation. Also, the user can change the previously-selected settings by simply selecting the installation information displayed on the installation information section of the auxiliary UI. Accordingly, there is no tedious procedure to go back to previous main UIs one by one in order to confirm or change the setting the user has selected.

The driver according to the above embodiment is installed to the user terminal to operate various devices connected to the user terminal through a wired or wireless interface, such as a printer, photocopier, facsimile machine, scanner, MFP, digital camera, and MP3 player, but may also be a sound card 460, a graphic card 465, a modem, or a LAN card 470 inserted to a slot of a main board 450 mounting a CPU 455 of a computer.

According to an embodiment of the present invention, a storage medium storing a software installation program comprises an installation unit to install to a user terminal software to drive a device connected to a user terminal according to a setting selected by a user, or software to perform a specified function, a main user interface control module to control a main user interface to display a setting of the software on the user terminal, and an auxiliary user interface control module to control an auxiliary user interface to display the selected setting, and the user terminal having a storage unit to store the setting selected by the user through the main user interface and the auxiliary user interface.

The software installation program, stored on the storage medium, further comprises a setting change module to change the setting displayed on the auxiliary user interface according to a user selection. The storage medium is a device to be connected and used through the user terminal.

According to the various embodiments of the general inventive concept as described above, it is possible for a user to easily confirm the setting that the user has selected during the software's installation, but it is also to easy to change the previously-selected setting.

Although a number of embodiments of the present general inventive concept have been shown and described, it will be appreciated by those skilled in the art that changes may be made to these embodiments without departing from the principles and spirit of the general inventive concept, the scope of which is defined in the appended claims and their equivalents.

## Claims

1. A software installation program (1) to be run on a user terminal (3), the software installation program (1) comprising:
installation unit means (10) to install software (2) to the user terminal (3) according to a setting selected by a user, the software (2) being adapted for driving a device (6) connected to the user terminal (3) or for performing a specified function;
a main control module (13) for controlling a main user interface for displaying a setting of the software (2) on the user terminal (3);
an auxiliary control module (17) for controlling an auxiliary user interface for displaying the selected setting, the software installation program (1) being adapted to store the setting selected by the user through the main user interface and auxiliary user interface in a storage unit (20) of the user terminal (3).

2. A software installation system comprising:
a software installation program (1) comprising:
installation unit means (10) to install to a user terminal (3) software (2) to drive a device (6) connected to the user terminal (3) according to a setting selected by a user, or software (2) for performing a specified function,
a main user interface control module (13) to control a main user interface to display a setting of the software (2) on the user terminal (3), and
an auxiliary user interface control module (17) to control an auxiliary user interface to display the selected setting; and
the user terminal (3) having a storage unit (20) to store the setting selected by the user through the main user interface and the auxiliary user interface.

3. The software installation system as claimed in claim 2, wherein information about the connected device (6) is displayed on at least one of the main user interface and the auxiliary user interface.

4. The software installation system as claimed in claim 2 or 3, wherein
the auxiliary user interface control module (17) generates a basic information section to display particular information about the software (2), and
an installation information section to display information about the setting selected through the main user interface.

5. The software installation system as claimed in claim 2, 3 or 4, wherein the storage unit (20) comprises:
a main user interface memory (23) to store information about the main user interface,
a registry key (25) to store files essential for the installation, and an auxiliary user interface memory (21) to store information about the auxiliary user interface.

6. The software installation system as claimed in any one of claims 2-5, the software installation program (1) further comprising:
a setting change module (15) to change the setting displayed on the auxiliary user interface according to a user selection.

7. The software installation system as claimed in claim 4, wherein, if a predetermined setting displayed on the installation information section of the auxiliary user interface is selected, the main user interface is activated to allow the user to change the setting.

8. The software installation system as claimed in claim 4, wherein, if a predetermined setting displayed on the installation information section of the auxiliary user interface is selected, at least one of a selection box or a pop-up window which are to set the setting is displayed.

9. The software installation system as claimed in claim 7, wherein information about the setting changed through the main user interface is displayed on the installation information section of the auxiliary user interface.

10. The software installation system as claimed in claim 8, wherein information about the setting changed through the selection box or the pop-up window is displayed on the installation information section of the auxiliary user interface.

11. The software installation system as claimed in any one of claims 2-10, wherein the device (6) is at least one of a device connected to the user terminal (3) through a wired or a wireless interface, or a device connected with a slot of a main board of the user terminal (3).

12. The software installation system as claimed in any one of claims 2-11, wherein the software (2) and the software installation program (1) are downloaded to the user terminal (3) through at least one of a storage medium (4), an Internet website or a dedicated server (5), a device (6), and an internal network (7).

13. The software installation system as claimed in claim 12, wherein the storage medium (4) includes at least one of a CD, a DVD, a diskette, and a memory stick for storing the software (2) and the software installation program (1).

14. The software installation system as claimed in claim 12, wherein the Internet website or the dedicated server (5) is accessible through a wired or wireless network.

15. The software installation system as claimed in claim 12, wherein the device (6) stores the software (2) and the software installation program (1), and the software (2) and the software installation program (1) are downloaded from the device (6) to the user terminal (3).

16. The software installation system as claimed in claim 15, wherein the device (6) is supported by a communication protocol to access an internet through a network, and downloads the software (2) and the software installation program (1) from a website or a dedicated server through the internet.

17. The software installation system as claimed in claim 15, wherein
the software (2) and the software installation program (1) as being downloaded to the user terminal (3) from the website or the dedicated server through the Internet are downloaded to the device (6), and
the device (6) provides the software (2) and the software installation program (1) to another user terminal.

18. The software installation system as claimed in claim 12, wherein the internal network system (7) comprises:
a main terminal to serve as a server and to store the software (2) and the software installation program (1), and
a user terminal serving as a client, the software (2) and the software installation program (3) being transmitted to the user terminal from the main terminal.

19. A method of installing software (2) for driving a device (6) connected to a user terminal (3) or software (2) for performing a specified function, the method comprising:
displaying a main user interface to select a setting necessary for the software installation; and
displaying an auxiliary user interface to display the setting selected through the main UI.

20. The method as claimed in claim 19, further comprising changing the setting displayed through the auxiliary user interface.

21. The method as claimed in claim 20, wherein, if a predetermined setting displayed on an installation information section of the auxiliary user interface is selected, the setting changing step comprises activating the main user interface to change the setting.

22. The method as claimed in claim 20, wherein, if a predetermined setting displayed on an installation information section of the auxiliary UI is selected, the setting changing step comprises displaying a selection box or a pop-up window to change the setting.

23. The method as claimed in claim 21, further comprising:
displaying the setting changed through the main user interface on the auxiliary user interface.

24. The method as claimed in claim 22, further comprising:
displaying the setting changed through the selection box or the pop-up window on the auxiliary user interface.

25. The method as claimed in any one of claims 18-24, further comprising:
downloading the software (2) and the software installation program (1) from at least one of a storage medium (4), an internet web site or a dedicated server (5), a device (6), and an internal network (7) to the user terminal (3).

26. The method as claimed in claim 25, wherein the storage medium (4) includes at least one of a CD, a DVD, a diskette, and a memory stick to store the software
(2) and the software installation program (1).

27. The method as claimed in claim 25, wherein the Internet website or the dedicated server (5) is accessible through a wired or wireless network.

28. The method as claimed in claim 25, further comprising:
storing the software (2) and the software installation program (1) in the device (6); and
downloading the software (2) and the software installation program (1) from the device (6) to the user terminal (3).

29. The method as claimed in claim 28, wherein the device (6) is supported by a communication protocol to access an internet through a network, and the method further comprises:
the storing of the software (2) and the software installation program (1) to the device (6), the software (2) and the software installation program (1) being downloaded from a website or a dedicated server through the internet.

30. The method as claimed in claim 28, wherein at the storing of the software (2) and the software installation program (1) in the device (6),
the device (6) downloads the software (2) and the software installation program (1) as being downloaded to the user terminal (3) from the website or the dedicated server through the Internet, and
the device provides the software (2) and the software installation program (1) to another user terminal.

31. The method as claimed in claim 25, wherein the downloading of the software (2) and the software installation program (1) to the user terminal (3) through the internal network (7) is performed in an internal network system including a main terminal serving as a server and storing the software (2) and the software installation program (1), and a user terminal serving as a client, the software (2) and the software installation program (1) being offered to the user terminal from the main terminal.

32. The method as claimed in any one of claims 18-31, wherein the device (6) is at least one of a device connected to the user terminal (3) through a wired or a wireless interface, and a device connected with a slot of a main board of the user terminal (3).

33. A method of installing a software application on a computer, the method comprising:
providing a main user interface to display a plurality of operation settings which are sequentially displayed; and
providing an auxiliary user interface displaying a plurality of previous operation settings together with a current operation setting to change a previously selected operation.

34. A storage medium (4) storing a program providing a method of installing a software application on a computer, the method comprising:
providing a main user interface to display a plurality of operation settings which are sequentially displayed; and
providing an auxiliary user interface displaying a plurality of previous operation settings together with a current operation setting to change a previously selected operation.
